# EUROPÄISCHE PATENTSCHRIFT

(11) **EP 2 682 624 B1**
(45) Veröffentlichungstag und Bekanntmachung des Hinweises auf die Patenterteilung: **12.08.2015**
(21) Anmeldenummer: 13002966.3
(22) Anmeldetag: 10.06.2013
(51) Int. Cl.: F16D 13/75

(54) **Reibungskupplung mit weggesteuerter Verschleißkompensation**
Friction clutch with path-controlled wear compensation
Accouplement à friction avec compensation d'usure en fonction de la course

(30) Priorität: 02.07.2012 DE 102012211411
(43) Veröffentlichungstag der Anmeldung: 08.01.2014
(73) Patentinhaber: Schaeffler Technologies AG & Co. KG, 91074 Herzogenaurach (DE)
(72) Erfinder: Schmalz, Patrick, 77815 Bühl (DE); Birk, Michael, 77815 Bühl (DE)

(56) Entgegenhaltungen:
- DE-A1-102009 055 895
- DE-A1-102011 018 317
- DE-A1-102011 087 415

## Beschreibung

Die vorliegende Erfindung betrifft eine Reibungskupplung mit einer weggesteuerten Verschleißkompensation und einem an einer Antriebsklinke elektrisch isoliert angeordneten Abstandshalter sowie ein Verfahren zur Montage einer Reibungskupplung gemäß den Merkmalen des Anspruchs 1.

Eine gattungsgemäße Reibungskupplung ist beispielsweise aus der DE 10 2011 018 317 A1 bekannt.

Eine weitere Reibungskupplung ist beispielsweise aus der DE 10 2008 051 100 A1 bekannt. Eine Verschleißkompensation des über die Lebensdauer der Reibungskupplung auftretenden Verschleißes der Reibbeläge in derartigen Reibungskupplungen wird bewirkt, indem zwischen der Anpressplatte und dem diese beaufschlagenden Hebelsystem ein Verstellring angeordnet wird, der in Umfangsrichtung angeordnete Rampen aufweist, die mit auf der Anpressplatte angeordneten Gegenrampen bei Verdrehung des Verstellrings den durch die axial abgetragenen Reibbeläge verursachten verringerten Abstand zwischen Gegendruckplatte und Anpressplatte und damit zwischen Gegendruckplatte und Hebelsystem ausgleicht. Auf diese Weise kann über die Lebensdauer der Reibungskupplung ein im Wesentlichen konstanter Anstellwinkel des Hebelsystems, beispielsweise einer Hebelfeder oder Tellerfeder, zum Gehäuse mit damit verbundenen konstanten Betätigungskräften der Reibungskupplung erzielt werden. Ferner ist bekannt, dass ein antriebsklinkenseitig angeordneter Abstandshalter mit einem Axialanschlag in Anlage bringbar ist, um einen Relativweg zwischen der Antriebsklinke und der Anpressplatte, beispielsweise durch Axialschwingungen, zu begrenzen. Ein Einstellen des antriebsklinkenseitigen Abstandshalters im Betriebspunkt der Reibungskupplung, bei dem der Abstandshalter mit dem Axialanschlag in Kontakt kommt, ist aufwändig und ungenau, wodurch der Montageaufwand der Reibungskupplung erhöht wird.

Es ist daher die Aufgabe der vorliegenden Erfindung, eine Reibungskupplung mit einer weggesteuerten Verschleißnachstelleinrichtung bereitzustellen, welche eine vereinfachte Montage des Abstandshalters und eine Verbesserung der Genauigkeit der Einstellung des Abstandshalters ermöglicht.

Die Lösung der Aufgabe erfolgt erfindungsgemäß durch eine Reibungskupplung mit den Merkmalen des Anspruchs 1. Bevorzugte Ausgestaltungen der Erfindung sind in den Unteransprüchen angegeben.

Bei einer erfindungsgemäßen Reibungskupplung mit einem Gehäuse mit einer drehfest und axial begrenzt zu diesem verlagerbar angeordneten Anpressplatte, die von einem sich an dem Gehäuse abstützenden Hebelsystem gegenüber einer gehäusefest angeordneten Gegendruckplatte unter Verspannung von Reibbelägen einer Kupplungsscheibe axial verlagerbar ist, wobei bei Unterschreiten eines bei verspannten Reibbelägen gebildeten Abstands zwischen Anpressplatte und Gegendruckplatte ein Formschluss zwischen einem mit einer Spindel eines an der Anpressplatte angeordneten Spindeltriebs zum Drehantrieb eines zwischen Anpressplatte und Hebelsystem angeordneten Verstellrings verbundenen Ritzel und einer an dem Gehäuse elastisch unter Vorspannung in Richtung Anpressplatte befestigten Antriebsklinke gebildet wird und während einer Betätigungsbewegung der Anpressplatte gegenüber dem Gehäuse nach einem Verdrehen des Ritzels mittels der Antriebsklinke gelöst wird, wobei ein Axialweg der Antriebsklinke gegenüber dem Ritzel mittels eines Axialanschlages mit einer Kontaktfläche und eines gehäuseseitig angeordneten Abstandshalters begrenzt ist, wobei die Kontaktfläche durch den Abstandshalter kontaktierbar ist. Erfindungsgemäß ist der Abstandshalter an der Antriebsklinke angeordnet, wobei der Abstandshalter von der Antriebsklinke elektrisch isoliert ist.

Die Verdrehung des Verstellrings erfolgt mittels eines im Verschleißfall gebildeten Formschlusses zwischen einer gehäusefest angeordneten Antriebsklinke und einem an der Anpressplatte aufgenommenen Spindeltrieb, wobei an dessen Spindel ein Ritzel angeordnet ist, auf dessen Außenprofil die Antriebsklinke im Normalzustand der Reibungskupplung während der Betätigungsvorgänge, die eine axiale Verlagerung der Anpressplatte zwischen einem geöffneten Zustand, bei dem die Reibbeläge der Kupplungsscheibe nicht in Eingriff zwischen Gegendruckplatte und Anpressplatte stehen, und einem geschlossenen Zustand, bei dem die Reibbeläge zwischen Gegendruckplatte und Anpressplatte axial verspannt sind und einen Reibeingriff mit diesen zur Übertragung des an der Reibungskupplung anstehenden Moments bilden, der Reibungskupplung bewirken. Mit zunehmendem Verschleiß der Reibbeläge verringert sich der Abstand wie Verschleißabstand zwischen Anpressplatte und Gegendruckplatte und erhöht sich der Relativweg zwischen Gehäuse und Anpressplatte, so dass bei Überschreiten eines vorgegebenen Relativweges während eines Betätigungsweges der Reibungskupplung mit sich in Richtung Gegendruckplatte bewegender Anpressplatte die Antriebsklinke formschlüssig in das Außenprofil des Ritzels einrastet und bei einer Rückbewegung der Anpressplatte das Ritzel um einen vorgegebenen Betrag verdreht. Hierdurch wird nach der folgenden kinematischen Kette die Spindel des Spindeltriebs verdreht und die auf der Spindel drehfest angeordnete und in den Verstellring radial eingreifende Spindelmutter längs der Spindel verlagert, so dass der Verstellring um einen vorgegebenen Betrag verdreht wird und dadurch der ursprüngliche Abstand zwischen Hebelsystem und Gegendruckplatte wieder hergestellt wird. Bei der Rückbewegung bewegt sich im Weiteren die Antriebsklinke wieder aus dem Außenprofil und gleitet auf diesem solange, bis der nächste Verschleißabstand erreicht ist. Die Antriebsklinke kann axial zwischen dem Hebelsystem und dem Gehäuse aufgenommen sein. Um eine Beschädigung der Antriebsklinke insbesondere bei klemmendem Ritzel zu vermeiden, ist die Antriebsklinke axial elastisch in Richtung des Gehäuses verlagerbar, wobei die Steifigkeit der Antriebsklinke so ausgelegt ist, dass die Kraft zur axial elastischen Verlagerung der Antriebsklinke gegen die Bewegung der Anpressplatte zur Verdrehung des Ritzels größer als die bei einem gewöhnlichen Nachstellprozess von der Antriebsklinke zur Verdrehung des Ritzels aufzuwendenden Kraft ist. Um das Ausweichen der Antriebsklinke bei klemmendem Ritzel zu ermöglichen, kann im Gehäuse ein entsprechender axialer Bauraum vorgehalten werden. Hierfür kann ein Freiraum für die Antriebsklinke im Bereich zwischen Hebelsystem, wie etwa Tellerfeder, und Gehäuse vorgesehen sein. An der Antriebsklinke kann ein Abstandshalter angeordnet sein, wobei der Abstandshalter beispielsweise bolzenförmig um eine Geometrieachse herum oder blechförmig als Abstandsblech ausgebildet sein kann. Der Abstandshalter kann sich, beispielsweise von einem radial ausgebildeten Bereich der Antriebsklinke, in axialer Richtung zu der Anpressplatte hin erstrecken. Bei einer axialen Verlagerung des Abstandshalters in Richtung der Anpressplatte kann der Abstandshalter eine Kontaktfläche eines Axialanschlages kontaktieren, wodurch ein Axialweg des Abstandshalters und damit der mit dem Abstandshalter verbundenen Antriebsklinke begrenzt werden kann.

Durch die Anordnung der Kontaktfläche und durch eine vorteilhafte Befestigung des Abstandshalters an der Antriebsklinke ist die Einstellung des Axialwegs zwischen Antriebsklinke und Ritzel unabhängig von der Bewegung des Hebelsystems, wie etwa einer Tellerfeder oder einer Hebelfeder. Die Kontaktfläche des Axialanschlages stellt dabei einen über die Lebensdauer konstanten Bezugspunkt dar, von dem sich die Anpressplatte mit zunehmender Anzahl von Nachstellvorgängen axial wegbewegt. Der Axialanschlag kann an dem Verstellring angeordnet sein und/oder einstückig mit dem Verstellring ausgebildet sein. Die Abhubbewegungen des Hebelsystems sind für die Kontaktfläche an dem Axialanschlag oder Verstellring ohne Einfluss. Die Antriebsklinke, der Abstandshalter und/oder der Axialanschlag können elektrisch leitend ausgebildet sein, wobei der Abstandshalter von der Antriebsklinke elektrisch isoliert ist. Bei der Montage der Reibungskupplung ist im Betriebspunkt ein Einstellen des Abstandshalters in axialer Richtung zu dem anpressplattenseitigen Axialanschlag erforderlich, wobei mittels eines an dem Abstandshalter und dem Axialanschlag angeordneten elektrischen Durchgangsmessers und/oder Widerstandsmessers ein Kontaktieren des Axialanschlages durch den Abstandshalter messbar und anzeigbar ist, beispielsweise durch ein über- oder unterschreiten von vorgegebenen Strom- oder Widerstandswerten. Dadurch, dass der Abstandshalter von der Antriebsklinke elektrisch isoliert ist, kann die Einstellung der benötigten Länge des Abstandshalters in axialer Richtung im Betriebspunkt vereinfacht werden, da die elektrische Durchgangsprüfung und/oder Widerstandsmessung auch bei einem schwergängig zu verstellenden Abstandshalter eindeutig ein Kontaktieren des Axialanschlages, insbesondere der Kontaktfläche des Axialanschlages, durch den Abstandshalter und somit das Erreichen der benötigten Länge des Abstandshalters messbar und anzeigbar ist. Ferner ermöglicht die erfindungsgemäße Reibungskupplung mit dem von der Antriebsklinke elektrisch isolierten Abstandshalter eine zuverlässigere Einstellung der benötigten Länge des Abstandshalters.

In einer bevorzugten Ausführungsform ist der Abstandshalter in einem an der Antriebsklinke angeordneten, elektrisch isolierenden Halteelement aufgenommen ist. Das Halteelement kann in Form eines elektrischen Isolators, beispielsweise aus einem Kunststoffmaterial, ausgebildet sein. Das Halteelement kann in Form eines Einsatzes, welcher in einer entsprechenden Öffnung in der Antriebsklinke aufgenommen werden kann, ausgebildet sein, beispielsweise in Form einer elektrisch isolierenden Blindmutter. Das Halteelement kann ein Innengewinde zur Aufnahme eines bolzenförmigen Abstandshalters mit einem entsprechenden Außengewinde aufweisen. Zur Aufnahme eines blechförmigen Abstandshalters kann das Halteelement einen Schlitz aufweisen, in welchen der blechförmige Abstandshalter zur Befestigung einsteckbar sein kann. Zur Sicherung gegen ein Herausfallen vor der Montage des Abstandshalters kann das Halteelement in die Antriebsklinke einklipsbar ausgestaltet sein, wodurch die Montage des Halteelementes und des Abstandshalters erleichtert werden kann

In einer besonders bevorzugten Ausgestaltung ist das Halteelement in Form einer Spreizmutter ausgebildet. Die Spreizmutter kann zur Sicherung gegen ein Lösen der Spreizmutter mit dem montierten Abstandshalter formschlüssig mit der Antriebsklinke verbunden werden, wobei die Spreizmutter durch beispielsweise Einschrauben eines bolzenförmigen Abstandshalters in die Spreizmutter im Bereich der Antriebsklinke aufgeweitet werden kann und formschlüssig mit der Antriebsklinke verrasten kann. Das formschlüssige Verrasten kann durch ein weiteres ausspreizen der Klipsverbindung zur Sicherung gegen ein Herausfallen ermöglicht werden. Durch das Aufweiten der Spreizmutter kann eine in radialer Richtung wirkende Kraft in die Antriebsklinke eingebracht werden, wodurch eine zusätzliche kraftschlüssige Verliersicherung durch Klemmen der Spreizmutter in der Antriebsklinke erreicht werden kann. Durch die Spreizmutter kann eine, nach Entfernen des Abstandshalters, lösbare Verbindung des Abstandshalters und des Halteelementes mit der Antriebsklinke ermöglicht werden, wobei der Abstandshalter in axialer Richtung, beispielsweise durch Verdrehen, in der Länge einstellbar ist.

In einer weiteren bevorzugten Ausführungsform weist das Halteelement zur Aufnahme in der Antriebsklinke eine rotationsunsymmetrische Form auf. Das Halteelement kann um eine Achse im Wesentlichen senkrecht zu dem Bereich der Antriebsklinke, an dem das Halteelement angeordnet ist, eine rotationsunsymmetrische Form aufweisen, wobei der Querschnitt des Halteelementes zumindest in der Ebene der Antriebsklinke unrund sein kann. Unrund sind dabei insbesondere geometrische Formen und Querschnitte, die von einem Kreis oder einer kreisförmigen Bewegung, insbesondere periodisch, abweichen. Durch den unrunden Querschnitt des Halteelementes zumindest in der Ebene der Antriebsklinke in dem das Haltelement in die Antriebsklinke aufgenommen ist, kann ein Verdrehen des Halteelementes relativ zu der Antriebskline bei der Montage vermieden werden.

In einer weiteren vorteilhaften Ausgestaltung ist der Axialanschlag einstückig mit dem Verstellring ausgebildet. Die Kontaktfläche des Axialanschlages kann dabei an dem Verstellring an einer der Anpressplatte abgewandten Seite angeordnet sein. Der Abstandshalter liegt nicht auf einem separat an dem Verstellring angeordneten und fixierten Element an, sondern kann unmittelbar mit dem Verstellring beziehungsweise der an seiner der Anpressplatte entgegengesetzten Oberfläche angeordneten Kontaktfläche in Anlage. Dadurch kann die erfindungsgemäße Reibungskupplung mit weggesteuerter Verschleißkompensation derart optimiert werden, dass mehr Platz zwischen Antriebsklinke und Ritzel entsteht, wodurch der benötigte Bauraum verringert werden kann.

In einer weiteren bevorzugten Ausführungsform ist die Kontaktfläche des Verstellrings entlang des Verstellweges des Verstellringes rampenförmig ausgebildet. Die Kontaktfläche des Verstellringes kann dabei in Abhängigkeit von einer Änderung der effektive Zahnweite ausgebildet sein, wobei die Änderung der effektiven Zahnweite über den Verschleißbereich konstruktiv ermittelbar ist, wodurch der Anschlag um eine vorgegebene Kompensation ergänzt werden kann. Dadurch kann insbesondere mittels einer rampenförmigen Kontaktfläche beispielsweise eine kleiner werdende Zahnweite durch einen ebenfalls kleiner werdenden Abstand kompensiert werden, wodurch eine im Wesentlichen lineare Verschleißnachstellung gewährleistet werden kann. Die Kontaktfläche kann entlang der Kontaktfläche, zumindest entlang eines Teilbereiches der Kontaktfläche, beispielsweise von einem Ende der Kontaktfläche zu dem anderen Ende der Kontaktfläche, rampenförmig ansteigen oder abfallen. Die Steigung der Kontaktfläche kann linear sein, oder beispielsweise einer Funktion folgen. Ferner kann die Steigung über die gesamte Kontaktfläche verlaufen, also insbesondere von einer Wandung der Aussparung zu der gegenüberliegenden Wandung der Aussparung verlaufen und zumindest teilweise negative und/oder zumindest teilweise positive Steigung aufweisen. Dadurch kann die Genauigkeit der Verschleißnachstellung verbessert werden. Ferner kann bei einer Verdrehung des Verstellringes eine definierte Anpassung der wirksamen Länge des Abstandshalters ermöglicht werden.

In einer weiteren Ausführungsform ist die Kontaktfläche als Boden einer, in einer der Anpressplatte entgegengesetzt angeordneten Oberfläche des Verstellrings, als Bodenvertiefung ausgestalteten Aussparung ausgebildet. Dadurch kann die erfindungsgemäße Reibungskupplung mit weggesteuerter Verschleißkompensation derart optimiert werden, dass mehr Platz zwischen Antriebsklinke und Ritzel entsteht, so dass Problemen bezüglich kleinen Bauraummöglichkeiten wirksam begegnet werden kann. Ferner ist die erfindungsgemäße Reibungskupplung einfacher in der Herstellung, da auf das Herstellen und die Montage eines zusätzlichen Bauteils, der Anlage für den Abstandshalter beziehungsweise das Abstandsblech aus dem Stand der Technik, verzichtet werden kann.

Die Erfindung betrifft ferner einen Antriebsstrang für ein Kraftfahrzeug mit einer Reibungskupplung, die wie vorstehend beschrieben aus- und weitergebildet sein kann. Durch die erfindungsgemäße Ausgestaltung der Reibungskupplung kann eine zuverlässigere Einstellung der benötigten Länge des Abstandshalters ermöglicht werden.

Ferner betrifft die Erfindung ein Verfahren zur Montage einer Reibungskupplung, die wie vorstehend beschrieben aus- und weitergebildet sein kann, umfassend die Schritte Bereitstellen einer erfindungsgemäßen Antriebsklinke und eines elektrisch isolierten Abstandshalters, Einsetzen des elektrisch isolierten Abstandshalters in die Antriebsklinke, insbesondere in eine erste Position, Anschließen eines Messwerkzeugs, insbesondere eines elektrischen Durchgangsprüfers und/oder Widerstandsmessers, an den Abstandshalter und einen Axialanschlag, Messen eines elektrischen Stromes und/oder eines elektrischen Widerstandes, Einstellen der Länge des Abstandshalters in einem Betriebspunkt der Reibungskupplung, insbesondere bis in eine zweite Position, Stoppen des Einstellens des Abstandshalters bei Erreichen eines definierten Messwertes des gemessenen elektrischen Stromes und/oder Widerstandes. Bei der Montage der Reibungskupplung kann der Abstandshalter elektrisch isoliert in die Antriebsklinke, insbesondere in einem radial ausgebildeten Abschnitt der Antriebsklinke, eingesetzt werden, beispielsweise durch Einstecken. Der Abstandshalter kann elektrisch leitend sein, wobei der Abstandshalter insbesondere in einem montierten Zustand von der Antriebsklinke elektrisch isoliert ist. Der Abstandshalter kann an der Antriebsklinke in eine erste Position eingesetzt werden, wobei der Abstandshalter in der ersten Position in dem Betriebspunkt der Reibungskupplung axial beabstandet zu der Kontaktfläche des elektrisch leitenden Axialanschlages ist. An den Abstandshalter und den Axialanschlag, welcher einstückig mit dem Verstellring ausgebildet sein kann, kann ein elektrischer Durchgangsprüfer und/oder ein elektrischer Widerstandsmesser zur elektrischen Durchgangs- und/oder Widerstandsmessung angeschlossen werden. Der elektrische Durchgang und/oder der elektrische Widerstand können für die Dauer der Einstellung des Abstandshalters gemessen werden. Zum Einstellen des Abstandshalters in dem Betriebspunkt der Reibungskupplung kann die Reibungskupplung in den Betriebspunkt verbracht werden, wobei der Abstandshalter in axialer Richtung, aus der Antriebsklinke zu der Anpressplatte hin, von der ersten Position bis in eine zweite Position verbracht werden kann, beispielsweise durch herausziehen des Abstandshalters aus der Antriebsklinke. In der zweiten Position kann der Abstandshalter den Axialanschlag, insbesondere die Kontaktfläche des Axialanschlages, kontaktieren, wobei der elektrische Durchgangsprüfer einen elektrischen Durchgang durch Überschreiten eines definierten Messwertes des elektrischen Stromes erfassen und anzeigen kann. Der elektrische Widerstandsmesser kann bei einem Kontakt des Abstandshalters mit dem Axialanschlag ein Unterschreiten eines definierten Messwertes des elektrischen Widerstandes erfassen und anzeigen. Dadurch kann ein Kontakt des Abstandshalters mit dem Axialanschlag, insbesondere der Kontaktfläche des Axialanschlages, in dem Betriebspunkt der Reibungskupplung eindeutig und unmittelbar angezeigt werden, so dass eine Verlagerung des Abstandshalters gestoppt werden kann. Mit Kontaktierung des Axialanschlages ist der Abstandshalter in die zweite Position verbracht, in der der Abstandshalter die zum Betrieb der Reibungskupplung benötigte Länge in dem Betriebspunkt der Reibungskupplung aufweist.

Bevorzugt umfasst das Verfahren, insbesondere der Verfahrensschritt Einsetzen des elektrisch isolierten Abstandshalters in die Antriebsklinke, weiterhin die Schritte Bereitstellen eines elektrisch isolierenden Halteelementes zur Aufnahme des Abstandshalters, insbesondere in Form einer Spreizmutter, Montieren des Halteelementes in die Antriebsklinke, insbesondere durch Einklipsen, Einsetzen, insbesondere Einschrauben, des Abstandshalters in das Halteelement. Das elektrisch isolierende Halteelement kann aus einem elektrisch nicht leitenden Material, beispielsweise Kunststoff, gefertigt sein. Das Haltelement kann in Form einer Spreizmutter ausgebildet sein, wobei der Abstandshalter an der Spreizmutter befestigt werden kann. Das Haltelement kann an der Antriebsklinke montiert werden, wobei das Haltelement in die Antriebsklinke eingeklipst werden kann, wodurch die Montage des Halteelementes vereinfacht werden kann. In das an der Antriebsklinke montierte Halteelement kann der Abstandshalter eingesetzt werden, wobei der Abstandshalter in das Halteelement eingeschraubt werden kann. Durch das Einsetzen des Abstandshalters in das an der Antriebsklinke montierte Halteelement kann das Halteelement zumindest teilweise ausgespreizt werden, insbesondere im Bereich der an der Antriebsklinke angeordneten Klipsverbindung, wobei durch das Aufspreizen der Klipsverbindung eine durch Entfernen des Abstandshalters lösbare, formschlüssige Verliersicherung zwischen Halteelement und Antriebsklinke ermöglicht werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
- Fig. 1:: eine schematische Schnittansicht einer Reibungskupplung mit einer weggesteuerten Verschleißkompensation nach dem Stand der Technik;
- Fig. 2: eine schematische Ansicht eines Halteelementes in Form einer Spreizmutter;
- Fig. 3:: einen schematische Ansicht einer Antriebsklinke mit einem in dem Halteelement eingesetztem Abstandshalter.

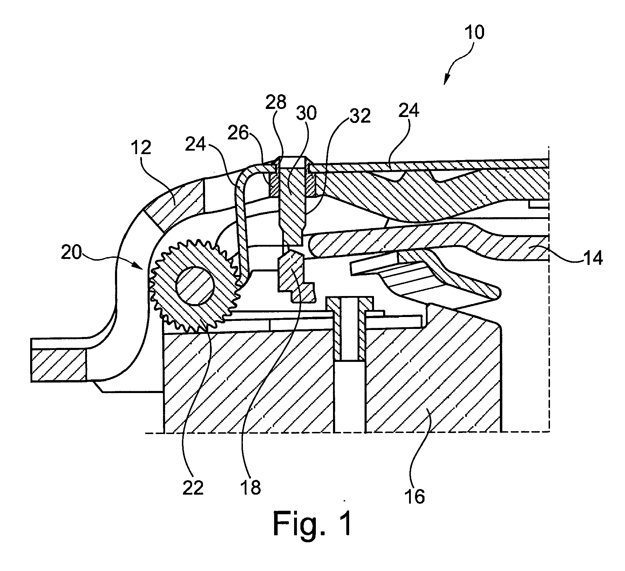

Die in Fig. 1 gezeigte Reibungskupplung 10, die etwa in einem Antriebsstrang angeordnet sein kann, weist ein Gehäuse 12 und eine fest an diesem aufgenommene Gegendruckplatte (nicht dargestellt) auf, gegen die die von einem Hebelsystem 14, beispielsweise einer Tellerfeder, axial verlagerbare, und drehfest mit dem Gehäuse 12 verbundene Anpressplatte 16 unter Bildung eines Reibschlusses mit den Reibbelägen einer Kupplungsscheibe (nicht dargestellten) verspannbar ist. Zur Kompensation von axialem Verschleiß der Reibbeläge ist zwischen dem Hebelsystem 14 und der Anpressplatte 16 ein Verstellring 18 angeordnet, der bei erkanntem Verschleiß von einem Spindeltrieb 20 verdreht wird. Hierzu wird im Verschleißzustand zwischen dem mit einer Spindel des Spindeltriebs 20 verbundenen Ritzel 22 und einer an dem Gehäuse 12 aufgenommenen Antriebsklinke 24 ein Formschluss hergestellt, wenn sich infolge des Verschleißes ein verlängerter Weg der Anpressplatte 16 gegenüber dem Gehäuse 12 ergibt. Bei einer Rückbewegung der Anpressplatte 16, beispielsweise zum Öffnen der Reibungskupplung 10, wird das Ritzel 22 und damit über den Spindeltrieb 20 der Verstellring 18 mit seinen in Umfangsrichtung angeordneten und an den komplementär zu diesen ausgebildeten Gegenrampen der Anpressplatte 16 anliegenden Rampen verdreht und der durch den Verschleiß der Reibbeläge verringerte Abstand zwischen Hebelsystem 14 und Gegendruckplatte verringert. Die Antriebsklinke 24 ist außerhalb des Gehäuses 12 mit einem radial ausgerichteten Bereich befestigt. Im Normalbetrieb ist die Antriebsklinke 24 gegen das Außenprofil des Ritzels 22 radial vorgespannt und gleitet auf diesem während den Betätigungsvorgängen der Reibungskupplung 10, also bei axialer Verlagerung der Anpressplatte 16. Bei einer Erhöhung des axialen Wegs der Anpressplatte 16 im Verschleißzustand rastet die Antriebsklinke 24 formschlüssig in das Außenprofil bei geschlossener Reibungskupplung 10 ein und nimmt beim Öffnen der Reibungskupplung 10 das Ritzel 22 mit. Anschließend gleitet die Antriebsklinke 24 wieder aus dem Außenprofil und ein Nachstellzyklus ist abgeschlossen.

Um den Weg der Antriebsklinke 24 zu begrenzen, um beispielsweise eine schrittweise Nachstellung vorzugeben oder beispielsweise ein klemmendes Ritzel 22 vor Beschädigung zu schützen, ist die Antriebsklinke 24 gegenüber dem Gehäuse 12 axial elastisch aufgenommen. An der Antriebsklinke 24 ist ein Halteelement 26 angeordnet, welches beispielsweise in die Antriebsklinke 24 eingeklipst sein kann. Das Halteelement 26 weist ein Innengewinde 28 auf, in welches ein Abstandshalter 30, welcher in Form eines Gewindestiftes mit einem entsprechenden Außengewinde 32 ausgebildet ist, eingeschraubt ist. Der Abstandshalter 30 ist durch das Halteelement 26 elektrisch isoliert von der Antriebsklinke 24 gelagert. Die Antriebsklinke 24 wird mittels des Abstandshalters 30 dann verlagert, wenn ein Axialweg, der zumindest einer Teilung des Außenprofils des Ritzels entsprechen kann, zwischen einem Axialanschlag, der einstückig mit dem Verstellring 18 ausgebildet ist, und dem Abstandshalter 30 aufgebraucht ist. Dabei verlagert sich bei einer Abhubbewegung der Anpressplatte 16 von der Gegendruckplatte nach Aufbrauch des Axialwegs die Antriebsklinke 24 mit dem Ritzel 22.

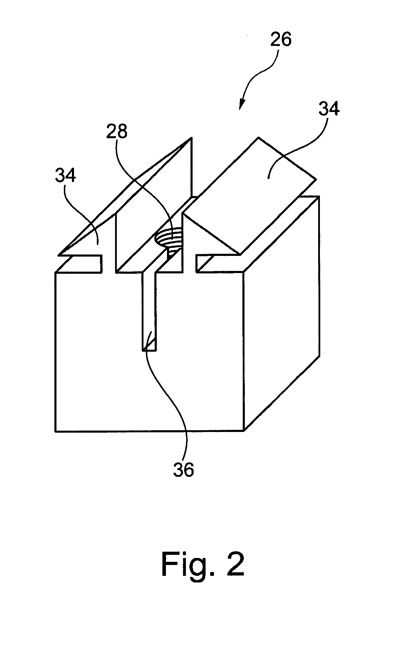

Figur 2 zeigt eine Ausführungsform eines erfindungsgemäßen Halteelementes 26. Das Halteelement 26 weist eine rechteckige, insbesondere quadratische, Form auf, wodurch ein Verdrehen des in die Antriebsklinke eingesetzten Halteelementes 26 vermieden werden kann. Das Halteelement 26 weist an einer der Antriebsklinke (nicht dargestellt) zugewandten Seite zwei Klips 34 zum Herstellen einer Klipsverbindung des Halteelementes 26 mit der Antriebsklinke auf. Das Halteelement 26 weist ein Innengewinde 28 zur Aufnahme des Abstandshalters (nicht gezeigt) auf, wobei durch das Gewinde ein präzises Einstellen der Länge des Abstandshalters ermöglicht werden kann. Durch einen zumindest teilweise in dem Halteelement 26 entlang des Innengewindes 28 ausgebildeten Schlitzes 36 kann das Halteelement 26 bei einem Einsetzen des Abstandshalters aufgeweitet werden, wodurch die Klipsverbindung weiter aufgeweitet und gegen Lösen gesichert werden kann.

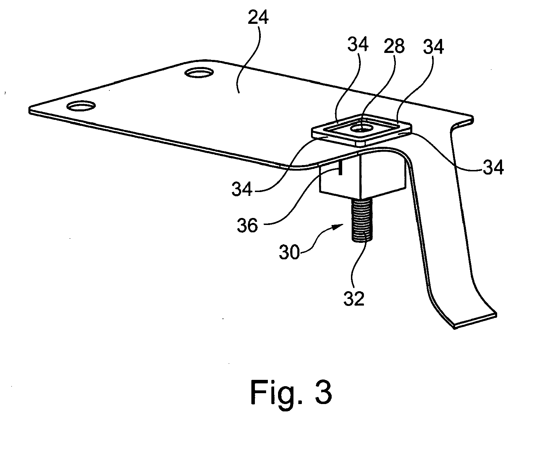

In Fig. 3 ist die Antriebsklinke 24 mit dem montierten Halteelement 26 und dem Abstandshalter 30 dargestellt. Das Halteelement 26 ist in die Antriebsklinke 24 eingeklipst und durch den in Form eines Gewindestiftes mit einem Außengewinde 32 ausgebildeten Abstandshalters 30, welcher in das Innengewinde 28 eingeschraubt ist, aufgespreizt und in der Antriebsklinke 24 verklemmt. Durch das Klemmen kann der Abstandshalter 30 in dem Halteelement 26, durch erhöhte Reibkräfte beispielsweise, gegen unbeabsichtigtes Lösen oder Verstellen gesichert sein.

### Bezugszeichenliste

- 10: Reibungskupplung
- 12: Gehäuse
- 14: Hebelsystem
- 16: Anpressplatte
- 18: Verstellring/ Axialanschlag
- 20: Spindeltrieb
- 22: Ritzel
- 24: Antriebsklinke
- 26: Halteelement
- 28: Innengewinde
- 30: Abstandshalter
- 32: Außengewinde
- 34: Klips
- 36: Schlitz

## Patentansprüche

1. Reibungskupplung (10) mit einem Gehäuse (12) mit einer drehfest und axial begrenzt zu diesem verlagerbar angeordneten Anpressplatte (16), die von einem sich an dem Gehäuse (12) abstützenden Hebelsystem (14) gegenüber einer gehäusefest angeordneten Gegendruckplatte unter Verspannung von Reibbelägen einer Kupplungsscheibe axial verlagerbar ist, wobei bei Unterschreiten eines bei verspannten Reibbelägen gebildeten Abstands zwischen Anpressplatte (16) und Gegendruckplatte ein Formschluss zwischen einem mit einer Spindel eines an der Anpressplatte (16) angeordneten Spindeltriebs (20) zum Drehantrieb eines zwischen Anpressplatte (16) und Hebelsystem (14) angeordneten Verstellrings (18) verbundenen Ritzel (22) und einer an dem Gehäuse (12) elastisch unter Vorspannung in Richtung Anpressplatte (16) befestigten Antriebsklinke (24) gebildet wird und während einer Betätigungsbewegung der Anpressplatte (16) gegenüber dem Gehäuse (12) nach einem Verdrehen des Ritzels (22) mittels der Antriebsklinke (24) gelöst wird, wobei ein Axialweg der Antriebsklinke (24) gegenüber dem Ritzel (22) mittels eines Axialanschlages (22) mit einer Kontaktfläche und eines gehäuseseitig angeordneten Abstandshalters (30) begrenzt ist, wobei die Kontaktfläche durch den Abstandshalter (30) kontaktierbar ist, wobei der Abstandshalter (30) an der Antriebsklinke (24) angeordnet ist,
**dadurch gekennzeichnet, dass**
der Abstandshalter (30) von der Antriebsklinke (24) elektrisch isoliert ist.

2. Reibungskupplung nach Anspruch 1, **dadurch gekennzeichnet, dass** der Abstandshalter (30) in einem an der Antriebsklinke (24) angeordneten, elektrisch isolierenden Halteelement (26) aufgenommen ist.

3. Reibungskupplung nach Anspruch 1 oder 2, **dadurch gekennzeichnet, dass** das Halteelement (26) in Form einer Spreizmutter ausgebildet ist.

4. Reibungskupplung nach einem der vorherigen Ansprüche, **dadurch gekennzeichnet, dass**
das Halteelement (26) zur Aufnahme in der Antriebsklinke (24) eine rotationsunsymmetrische Form aufweist.

5. Reibungskupplung nach einem der vorherigen Ansprüche, **dadurch gekennzeichnet, dass**
der Axialanschlag einstückig mit dem Verstellring (18) ausgebildet ist.

6. Reibungskupplung nach einem der vorherigen Ansprüche, **dadurch gekennzeichnet, dass** die Kontaktfläche des Verstellrings (18) entlang des Verstellweges des Verstellringes (18) rampenförmig ausgebildet ist.

7. Reibungskupplung nach einem der vorherigen Ansprüche, **dadurch gekennzeichnet, dass** die Kontaktfläche als Boden einer, in einer der Anpressplatte (16) entgegengesetzt angeordneten Oberfläche des Verstellrings (18), als Bodenvertiefung ausgestalteten Aussparung ausgebildet ist.

8. Antriebsstrang mit wenigstens einer Reibungskupplung (10) nach einem der Ansprüche 1 bis 7.

9. Verfahren zur Montage einer Reibungskupplung gemäß Anspruch 1, umfassend die Schritte
- Bereitstellen einer erfindungsgemäßen Antriebsklinke (24) und eines elektrisch isolierten Abstandshalters (30),
- Einsetzen des elektrisch isolierten Abstandshalters (30) in die Antriebsklinke (24), insbesondere in eine erste Position,
- Anschließen eines Messwerkzeugs, insbesondere eines elektrischen Durchgangsprüfers und/oder Widerstandsmessers, an den Abstandshalter (30) und einen Axialanschlag (18),
- Messen eines elektrischen Stromes und/oder eines elektrischen Widerstandes,
- Einstellen der Länge des Abstandshalters (30) in einem Betriebspunkt der Reibungskupplung (10), insbesondere bis in eine zweite Position,
- Stoppen des Einstellens des Abstandshalters (30) bei Erreichen eines definierten Messwertes des gemessenen elektrischen Stromes und/oder Widerstandes.

10. Verfahren nach Anspruch 9, weiterhin umfassend die Schritte
- Bereitstellen eines elektrisch isolierenden Halteelementes (26) zur Aufnahme des Abstandshalters (30), insbesondere in Form einer Spreizmutter,
- Montieren des Halteelementes (26) in die Antriebsklinke (24), insbesondere durch Einklipsen,
- Einsetzen, insbesondere Einschrauben, des Abstandshalters (30) in das Halteelement (26).

## Claims

1. Friction clutch (10) having a housing (12) with a pressure plate (16) which is arranged so as to be rotationally fixed and axially displaceable relative to said housing to a limited extent, which pressure plate can, by way of a lever system (14) which is supported on the housing (12), be displaced axially relative to a counterpressure plate, which is arranged fixedly with respect to the housing, so as to brace friction linings of a clutch disk, wherein, in the event of undershooting of a distance, formed when the friction linings are braced, between pressure plate (16) and counterpressure plate, a form fit is generated between a pinion (22), which is connected to a spindle of a spindle drive (20), said spindle drive being arranged on the pressure plate (16) and serving for the rotational drive of an adjustment ring (18) arranged between pressure plate (16) and lever system (14), and a drive pawl (24), which is fastened to the housing (12) elastically under preload in the direction of the pressure plate (16), said form fit being eliminated during an actuation movement of the pressure plate (16) relative to the housing (12) after a rotation of the pinion (22) by means of the drive pawl (24), wherein an axial travel of the drive pawl (24) relative to the pinion (22) is limited by means of an axial stop (22) with a contact surface and by means of a spacer (30) arranged at the housing side, wherein the contact surface can be contacted by the spacer (30), wherein the spacer (30) is arranged on the drive pawl (24), **characterized in that** the spacer (30) is electrically insulated with respect to the drive pawl (24).

2. Friction clutch according to Claim 1, **characterized in that** the spacer (30) is received in an electrically insulating holding element (26) arranged on the drive pawl (24).

3. Friction clutch according to Claim 1 or 2, **characterized in that** the holding element (26) is in the form of an expanding nut.

4. Friction clutch according to one of the preceding claims, **characterized in that** the holding element (26), in order to be received in the drive pawl (24), has a rotationally asymmetrical shape.

5. Friction clutch according to one of the preceding claims, **characterized in that** the axial stop is formed in one piece with the adjustment ring (18).

6. Friction clutch according to one of the preceding claims, **characterized in that** the contact surface of the adjustment ring (18) is of ramp-shaped form along the adjustment travel of the adjustment ring (18).

7. Friction clutch according to one of the preceding claims, **characterized in that** the contact surface is formed as the base of a recess which is formed as a base depression in a surface, arranged opposite the pressure plate (16), of the adjustment ring (18).

8. Drivetrain having at least one friction clutch (10) according to one of Claims 1 to 7.

9. Method for assembling a friction clutch according to Claim 1, comprising the steps:
- providing a drive pawl (24) according to the invention and an electrically insulated spacer (30),
- inserting the electrically insulated spacer (30) into the drive pawl (24), in particular into a first position,
- connecting a measurement tool, in particular an electrical continuity tester and/or resistance meter, to the spacer (30) and to an axial stop (18),
- measuring an electrical current and/or an electrical resistance,
- adjusting the length of the spacer (30) at an operating point of the friction clutch (10), in particular as far as into a second position,
- stopping the adjustment of the spacer (30) when a defined measurement value of the measured electrical current and/or resistance is attained.

10. Method according to Claim 9, furthermore comprising the steps:
- providing an electrically insulating holding element (26) for receiving the spacer (30), in particular in the form of an expanding nut,
- installing, in particular clipping, the holding element (26) into the drive pawl (24),
- inserting, in particular screwing, the spacer (30) into the holding element (26).

## Revendications

1. Accouplement à friction (10) avec un boîtier (12) avec un plateau de pression (16) disposé de façon fixe en rotation et déplaçable de façon axialement limitée par rapport à celui-ci, qui est déplaçable axialement par un système de leviers (14) s'appuyant sur le boîtier (12) par rapport à un plateau de contre-pression disposé de façon solidaire du boîtier avec déformation de garnitures de friction d'un disque d'accouplement, dans lequel, en cas de descente sous une distance formée entre le plateau de pression (16) et le plateau de contre-pression avec les garnitures de friction déformées, il se forme une liaison par emboîtement entre un pignon (22) assemblé à une broche d'un entraînement à broche (20) disposé sur le plateau de pression (16) pour l'entraînement d'une bague de réglage (18) disposée entre le plateau de pression (16) et le système de leviers (14) et un cliquet d'entraînement (24) fixé élastiquement au boîtier (12) avec précontrainte en direction du plateau de pression (16) et il est libéré pendant un mouvement d'actionnement du plateau de pression (16) par rapport au boîtier (12) après une rotation du pignon (22) au moyen du cliquet d'entraînement (24), dans lequel un trajet axial du cliquet d'entraînement (24) par rapport au pignon (22) est limité au moyen d'une butée axiale (22) avec une face de contact et d'un écarteur (30) disposé côté boîtier, dans lequel la face de contact peut être touchée par l'écarteur (30), dans lequel l'écarteur (30) est disposé sur le cliquet d'entraînement (24), **caractérisé en ce que** l'écarteur (30) est électriquement isolé du cliquet d'entraînement (24).

2. Accouplement à friction selon la revendication 1, **caractérisé en ce que** l'écarteur (30) est logé dans un élément de maintien électriquement isolant (26), disposé sur le cliquet d'entraînement (24).

3. Accouplement à friction selon la revendication 1 ou 2, **caractérisé en ce que** l'élément de maintien (26) est réalisé sous la forme d'un écrou expansible.

4. Accouplement à friction selon l'une quelconque des revendications précédentes, **caractérisé en ce que** l'élément de maintien (26) présente une forme non symétrique de révolution pour le logement dans le cliquet d'entraînement (24).

5. Accouplement à friction selon l'une quelconque des revendications précédentes, **caractérisé en ce que** la butée axiale est réalisée d'une seule pièce avec la bague de réglage (18).

6. Accouplement à friction selon l'une quelconque des revendications précédentes, **caractérisé en ce que** la face de contact de la bague de réglage (18) est réalisée en forme de rampe le long du trajet de réglage de la bague de réglage (18).

7. Accouplement à friction selon l'une quelconque des revendications précédentes, **caractérisé en ce que** la face de contact est réalisée sous forme de fond d'un évidement configuré comme un creux de fond dans une surface de la bague de réglage (18) opposée au plateau de pression (16).

8. Ligne de transmission avec au moins un accouplement à friction (10) selon l'une quelconque des revendications 1 à 7.

9. Procédé de montage d'un accouplement à friction selon la revendication 1, comprenant les étapes suivantes:
- préparation d'un cliquet d'entraînement selon l'invention (24) et d'un écarteur électriquement isolé (30),
- insertion de 1'écarteur électriquement isolé (30) dans le cliquet d'entraînement (24), en particulier dans une première position,
- raccordement d'un instrument de mesure, en particulier d'un testeur de passage électrique et/ou d'un ohmmètre, à l'écarteur (30) et à une butée axiale (18),
- mesure d'un courant électrique et/ou d'une résistance électrique,
- réglage de la longueur de l'écarteur (30) dans un point de fonctionnement de l'accouplement à friction (10), en particulier jusque dans une deuxième position,
- arrêt du réglage de l'écarteur (30) lorsqu'une valeur de mesure définie du courant électrique mesuré et/ou de la résistance électrique mesurée est atteinte.

10. Procédé selon la revendication 9, comprend en outre les étapes suivantes:
- préparation d'un élément de maintien électriquement isolant (26) destiné à recevoir l'écarteur (30), en particulier sous la forme d'un écrou expansible,
- montage de l'élément de maintien (26) dans le cliquet d'entraînement (24), en particulier au moyen de clips,
- introduction, en particulier vissage, de l'écarteur (30) dans l'élément de maintien (26).
